Europäisches Patentamt

European Patent Office

Office européen des brevets

(19)

(11) Veröffentlichungsnummer: **0 022 496**
**B1**

(12) **EUROPÄISCHE PATENTSCHRIFT**

(45) Veröffentlichungstag der Patentschrift:
**02.03.83**

(21) Anmeldenummer: **80103630.2**

(22) Anmeldetag: **26.06.80**

(51) Int. Cl.³: **H 02 H 7/00,** H 02 H 3/16,
H 02 H 7/16

(54) Erdschlussüberwachung für einen mehrphasigen Filterkreis.

(30) Priorität: **11.07.79 DE 2928024**

(43) Veröffentlichungstag der Anmeldung:
**21.01.81 Patentblatt 81/3**

(45) Bekanntmachung des Hinweises auf die Patenterteilung:
**02.03.83 Patentblatt 83/9**

(84) Benannte Vertragsstaaten:
**DE GB SE**

(56) Entgegenhaltungen:
**DE-A-2 051 412**
**US-A-4 104 687**

(73) Patentinhaber: **SIEMENS AKTIENGESELLSCHAFT,
Berlin und München Wittelsbacherplatz 2,
D-8000 München 2 (DE)**

(72) Erfinder: **Becker, Michael, Dipl.-Ing., Ringstrasse 50,
D-8521 Uttenreuth (DE)**
Erfinder: **Fendt, Alfons, Dipl.-Ing., Gleiwitzer Strasse 64,
D-8520 Erlangen (DE)**
Erfinder: **Povh, Dusan, Dr., Waltherstrasse 3,
D-8500 Nürnberg (DE)**
Erfinder: **Renz, Klaus, Dipl.-Ing.,
Heinrich-Heine-Strasse 15, D-8510 Fürth (DE)**
Erfinder: **Schuch, Gerhard, Heuweg Nr. 8,
D-8520 Erlangen (DE)**
Erfinder: **Waldmann, Hermann, Dr., Wiesenstrasse 14,
D-8521 Weiher (DE)**

Erdschlußüberwachung für einen mehrphasigen Filterkreis

Die Erfindung betrifft eine Erdschlußüberwachung für einen mehrphasigen Filterkreis mit geerdetem Sternpunkt, wobei die netzfrequente Grundschwingung des Erdstromes mittels eines Filters gewonnen wird und über eine Gleichrichterschaltung und ein Glättungsglied in eine der Amplitude der Grundschwingung proportionale Gleichspannung umgesetzt wird, welche über einen Grenzwertmelder eine Zeitstufe mit Ansprechverzögerung beaufschlagt. Derartige Filterkreise werden beispielsweise in Hochspannungsübertragungssystemen verwendet.

Eine Erdschlußüberwachung der eingangs genannten Art ist gemäß der US-A-4 104 687 bekannt. Zur meßtechnischen Erfassung des Erdstromes wird mittels einer von den Filterspannungen beaufschlagten dreiphasigen Spannungsteilerschaltung, einem daran angeschlossenen dreiphasigen Wandler und einem mit dessen Sekundärwicklungen verbundenen Summierverstärker ein künstlicher Nullpunkt gebildet. Damit sich im ungestörten Fall die Eingangsströme des Summierverstärkers sich gegenseitig aufheben, ist ein exakter Abgleich mittels eines besonderen Justiernetzwerkes erforderlich.

Der Erfindung liegt die Aufgabe zugrunde, eine Erdschlußüberwachung der eingangs genannten Art zu schaffen, bei welcher die meßtechnische Erfassung des Erdstromes einfacher und mit weitaus geringerem Aufwand erfolgt.

Erfindungsgemäß wird diese Aufgabe dadurch gelöst, daß zwischen dem Sternpunkt und Erde ein einphasiger induktiver Stromwandler für den Erdstrom angeschlossen ist.

Die an die einzelnen Phasen des Drehstromnetzes angeschlossenen Stränge des Filterkreises sind im allgemeinen jeweils auf die Frequenz der charakteristischen Oberschwingungen abgestimmt. Bei einer derartigen Abstimmung wirkt der Filterkreis auf die Grundschwingung praktisch wie ein kapazitiver Widerstand. Unter der gegebenen Voraussetzung eines annähernd symmetrisch belasteten Drehstromnetzes heben sich die Grundschwingungsströme im Sternpunkt im wesentlichen auf.

Bei einem Erdschluß in einer Phase des mehrphasigen Filterkreises fließt in dieser Phase fast kein Grundschwingungsstrom mehr zum Sternpunkt. Damit entsteht ein Nullstrom der Grundschwingung vom Sternpunkt zur Erde, dessen Amplitude erheblich über denjenigen Werten der Nullströme liegt, die durch andere Fehler im Filterkreis hervorgerufen werden, beispielsweise durch den Ausfall eines Kondensators in der Kondensatorbatterie des Filterkreises. Die durch den Erdschluß entstehende große Amplitude des Grundschwingungs-Nullstromes wird durch den Grenzwertmelder erkannt. Dem Grenzwertmelder ist vorzugsweise eine Zeitstufe mit Ansprechverzögerung nachgeschaltet. Die Zeitstufe soll verhindern, daß Einschwingvorgänge im Filterkreis und Schaltvorgänge zu Fehlauslösungen führen.

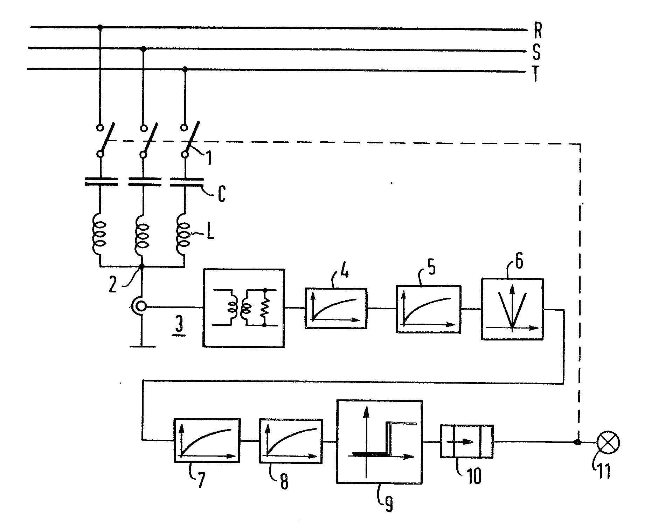

Ein Ausführungsbeispiel der Erfindung ist in der Zeichnung dargestellt und wird im folgenden näher beschrieben:

An ein Drehstromnetz RST ist über eine Schalteinrichtung 1 ein dreiphasiger Filterkreis angeschlossen. Jede Phase des Filterkreises besteht aus der Reihenschaltung eines Kondensators C mit einer Drosselspule L. Jeder Kondensator ist in der Praxis als Kondensatorbatterie aufgebaut, die eine Anzahl von parallelen Strängen mit jeweils einer großen Anzahl von in Reihe geschalteten Kondensatoren enthält. Die drei Phasen sind am Sternpunkt 2 zusammengeschaltet. Der Sternpunkt 2 ist geerdet.

Zwischen dem Sternpunkt 2 und Erde ist ein potentialtrennender induktiver Stromwandler 3 geschaltet, der den Erdstrom des dreiphasigen Filterkreises erfaßt. Die Meßspannung des Stromwandlers 3 wird über zwei in Reihe geschaltete Filter 4 und 5 geführt, die als Tiefpässe erster Ordnung ausgebildet und auf die Netzfrequenz des Drehstromnetzes abgestimmt sind. Die Glättungszeitkonstante der Filter 4 und 5 kann bei einem 50-Hz-Netz 2 ms betragen. Durch die Reihenschaltung der beiden Filter werden die Oberschwingung in der Meßspannung stark unterdrückt, während die Grundschwingung praktisch nicht gedämpft wird. Am Ausgang des Filters 5 wird somit eine Meßspannung erhalten, die nur die Grundschwingung des Erdstromes enthält. Die Ausgangsspannung des Filters 5 wird in einer schwellenwertfreien Gleichrichterschaltung 6 gleichgerichtet und über einen weiteren zweistufigen Tiefpaß erster Ordnung mit den Glättungsgliedern 7 und 8 in eine amplitudenproportionale Gleichgröße umgeformt. Die Glättungszeitkonstante der Glättungsglieder 7 und 8 kann beispielsweise 12 ms bis 15 ms betragen. Am Ausgang des Glättungsgliedes 8 wird somit eine der Amplitude der Grundschwingung des Erdstromes proportionale Gleichspannung erhalten. Diese wird einem Grenzwertmelder 9 zugeführt, dessen Ansprechschwellenwert beispielsweise auf 10%–30% des Nennstromes in einer Phase des Filterkreises eingestellt sein kann. Dem Grenzwertmelder 9 ist eine Zeitstufe 10 mit Ansprechverzögerung nachgeschaltet, um Fehlauslösungen durch Einschwing- und Schaltvorgänge zu vermeiden. Die Zeitstufe steuert die Anzeige 11 an. Gleichzeitig kann durch Betätigung der Schalteinrichtung 1 der Filterkreis vom Drehstromnetz RST getrennt werden, wie dies durch die strichlierte Linie dargestellt ist.

Im ungestörten Zustand heben sich die grundschwingungsströme, für die der auf die Oberschwingungen abgestimmte Filterkreis praktisch einen kapazitiven Widerstand darstellt, im Sternpunkt 2 gegenseitig auf. Der Grenzwertmelder 9 spricht nicht an. Bei einem Erdschluß in einer Phase fließt der Grundschwingungsstrom in dieser Phase nicht mehr zum Sternpunkt, sondern über den Erdschluß ab. Im Sternpunkt entsteht ein Grundschwingungsstrom gegen Erde mit großer Amplitude. Der Grenzwertmelder 9 spricht an. Die Strömung wird angezeigt. Gegebenenfalls kann der Filterkreis abgeschaltet werden.

## Patentanspruch

Erdschlußüberwachung für einen mehrphasigen Filterkreis (CL) mit geerdetem Sternpunkt (2), wobei die netzfrequente Grundschwingung des Erdstromes mittels eines Filters (4, 5) gewonnen wird und über eine Gleichrichterschaltung (6) und ein Glättungsglied (7, 8) in eine der Amplitude der Grundschwingung proportionale Gleichspannung umgesetzt wird, welche über einen Grenzwertmelder (9) eine Zeitstufe (10) mit Ansprechverzögerung beaufschlagt, dadurch gekennzeichnet, daß zwischen dem Sternpunkt (2) und Erde ein einphasiger induktiver Stromwandler (3) für den Erdstrom angeschlossen ist.

## Claim

Earth-fault monitoring for a multi-phase filter circuit (CL) having an earthed neutral point (2), wherein the mains frequency fundamental oscillation of the earth current is obtained by means of a filter (4, 5) and converted into a direct voltage proportional to the amplitude of the fundamental oscillation and operates by a limit value indicator (9) to trigger a time stage (10) with a delayed response, characterised in that a single-phase inductive current transformer (3) is connected between the neutral point (2) and earth for the earth current.

## Revendication

Agencement de surveillance pour un circuit filtre polyphasé (CL) comportant un neutre à la terre (2), l'oscillation fondamentale, ayant la fréquence du réseau, du courant de terre étant obtenue au moyen d'un filtre (4, 5) et étant convertie, par l'intermédiaire d'un circuit redresseur (6) et d'un élément de lissage (7, 8), en une tension continue, proportionnelle à l'amplitude de l'oscillation fondamentale, qui est appliquée à un étage retardateur (10) à réponse différée, par l'intermédiaire d'un indicateur de valeur limite (9), caractérisé par le fait qu'entre le neutre (2) et la terre est branché un transformateur de courant (3) inductif monophasé pour le courant de terre.